# EUROPEAN PATENT SPECIFICATION

(11) **EP 0 922 927 B1**
(45) Date of publication and mention of the grant of the patent: **28.04.2004**
(21) Application number: 98850178.9
(22) Date of filing: 25.11.1998
(51) Int. Cl.: G01B 5/00

(54) **Measuring device for vehicles**
Messgerät für Kraftwagen
Appareil de mesure pour véhicules

(30) Priority: 28.11.1997 SE 9704437; 28.11.1997 SE 9704438; 04.03.1998 SE 9800674; 30.03.1998 SE 9801038
(43) Date of publication of application: 16.06.1999
(73) Proprietor: JNE AB, S-597 24 Atvidaberg (SE)
(72) Inventor: Nilsson, Lars, 597 50 Atvidaberg (SE); Johansson, Hakan, 597 91 Atvidaberg (SE)
(74) Representative: Berglund, Erik Wilhelm

(56) References cited:
- DE-A- 19 518 268
- US-A- 3 699 659
- US-A- 4 015 338
- US-A- 4 473 954
- US-A- 4 621 435
- US-A- 5 207 002
- US-A- 5 343 628
- US-A- 5 507 101
- US-A- 5 647 139

## Description

As an aid when checking damages on crashed cars and on repairing these respectively it is known to use rulers constituted by an extendable, for instance telescopic part that is fixable to its length and in its ends are provided with measuring points. The ruler may be used for measuring or adjusted according to measures taken from an undamaged side or alternatively from a data sheet or drawing for the vehicle for comparisons. To this end the ruler is provided with scales. Since most vehicles already from fabrication are provided with a number of holes in the bottom of the body that are very precisely defined to their position one can with the aid of such a ruler comparatively simply through measuring between defined holes obtain a good measuring accuracy for cross measuring for instance.

A drawback with these rulers is however that they are comparatively work requiring in particular at larger damages when the ruler becomes comparatively long and consequently difficult to handle and to locate with the required exactness with its points. In reality this often means that its a two person job with the resulting costs.

It is also known to arrange measuring systems on the correction, straightening benches that are used when repairing cars. These measuring systems and correction benches or fixtures are however very expensive and can only be acquired by firms with a sufficiently large volume of work and each bench can only take one car at a time. This means that many who actually would have to use measuring equipment can not afford it, but instead have to work instinctively.

One such system is known from the US patent 5,507,101, here a datum bar is connected by special fastening means to the bottom of a vehicle. A sliding carriage is arranged moveable along the datum bar and supports a trammel bar that in the other end is provided with a measuring tape spool and a pointer for measuring.

Yet another time when a simple measuring is desirable is when a car has been damaged. A good knowledge of how badly damaged the car is, is necessary in order to enable the insurance company, the owner or the man who is to repair it if the car is worth repairing or if it should be broken up and to assess expected repair time and cost. Even here a simple measuring method with accompanying means would be desirable, provided that sufficient exactness can be achieved. To achieve the desired precision it is further desirable with a three-dimensional measuring.

In view of the above problems the invention has as its object to provide a low-cost simply manageable measuring system for the measuring of the bottom plates of cars.

The system in accordance with the invention constitute in its most simple variety an extendable ruler or bar that in one end is provided with a measuring point and in the other end with a fastening means including a powerful magnet for the fixing to the underside of the vehicle and a centering device for the centering of the fastening means in relation to a measure hole in the body. Since today very powerful magnets are available the end of the ruler may be firmly and securely be held to the body even if rust and/or underseal should be present around the hole.

When the ruler is fixed in one end the user may measure distances, compare left and right measures or compare with data sheets. The ruler is at the magnetic fastening bracket preferably swivable laterally as well as vertically. In this way it can easily be moved to different measuring points or out of the way without having to be dismounted The ruler may easily be used by one person and even on cars that stand on their own wheels. The ruler can be extended to approximately the right distance, inserted under the car and with a simple movement be fastened to the car with the magnet and then the measurements can be controlled in the other end of the ruler or compared with a new reading with the magnet fastened to a symmetric location on the other side.

The centering device for the fastening bracket can be constituted of a cone pretensioned outwards by a spring. At mounting the cone is inserted into the hole and the fastening means is pressed against the hole until the magnet grips. Practically it has turned out that this fastening means result in a good grip that is also always centered in the hole. This also means that the fastening means is adaptable to different hole sizes and the invented fastening means can be used on a very great variety of cars without change of adaptors. With an easy bending movement the fastening means can be removed again. With the right relation between the cone angle, the spring force and the magnetic force, the spring of the cone can center the fastening means during the movement towards the mounted position or actually even after mounting since the force necessary to achieve lateral movement always is smaller than the holding force (since the friction coefficient is always smaller than 1). Even if this balance is not achieved it is easy to feel when the cone has reached its correct position, since the bracket will have a considerably increased resistance against movement away from this position.

The magnetic fastening means in the end of the ruler may be permanently fastened to this or preferably removably. Also for the connection to the ruler magnetic force can be used or a simple snap lock with a spring loaded ball and a circular grove.

The fastening means can according to the invention not only be used together with a ruler but may also be used to mount and center other measuring equipment increasing speed and precision when using these. For instance the rod in the small end of the ruler may in its upper end also be provided with a magnetic selfcentering fastening means so that a specific length measure can be monitored while for instance straightening work is carried out.

A further part of the invented system is a device that deliver a line of light and that can be mounted either on the self-centering beam (preferably centered) or on a magnetic fastening bracket. When mounted on the self-centering beam the line automatically will provide a plane that is essentially horizontal or at least perpendicular to the vertical symmetry plane of the car. This means that it can be used as a reference for vertical measurements at least at symmetrical points, for instance by means of an adjustable measuring rod arranged in the outer end of the ruler and provided with a scale. To obtain exact measure figures the rod has to be vertical but in order to compare the left and right side it is only necessary to compare readings without adjustments of the rod in the ruler, which in turn means very rapid compairing.

In a more sophisticated development of the invented system using for instance the transverse beam the angles of the ruler laterally and vertically are electronically registered as well as the length of the ruler. In this way a connected computer may provide quickly and precise a mesuring chart of the vehicle, that can be compared with a corresponding data chart of what the measurements should have been. Also this version can to a certain extent be used with the car standing on its wheels. Connection to the computer may be wireless. This version of the invention has the advantage of requiring very little or perhaps no adjustment or precision on mounting since the computer from three undamaged points can relate the measuring to the actual datum plane of the vehicle.

It deserves to be mentioned that the invented system and its components allow not only simple and fast measuring, but it is also easy to understand how it should be used and no length training or tutoring is necessary.

Further advantages and characteristics of the invention are apparent from the claims and the following description of preferred embodiments. In the drawings fig. 1 shows a ruler according to the invention, fig 2 an enlarged part of this and fig 3 - 6 different views of a 3D-embodiment of the invention.

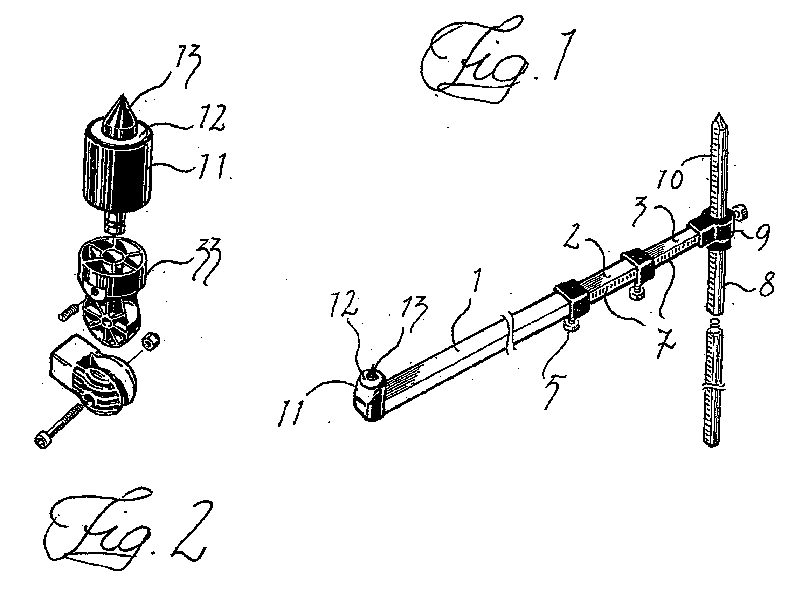

The ruler shown in fig 1 is constituted of three in each other telescoping parts. In the connection between the first part 1 with the largest cross measure and the intermediate part 2 a ball snap means and a locking screw 5 are arranged so that the relative positions easily can be found and locked for instance at each decimeter or half meter. The part with the smallest cross section is steplessly adjustable in the intermediate part and fixable to its extent by means of a lock screw. Measuring scales 7 are arranged on sides of the ruler to allow among other things simple reading from the side when the ruler is used on a car standing on its wheels.

In the outer and smallest end of the ruler a measuring rod 8 with a conical tip is arranged adjustable perpendicular in relation to the ruler in a guide 9 and lockable to its protrusion relative this, also the rod is provided with a scale 10.

In the outer end of the telescopic tube with the largest cross section a magnetic fastening means 11 is arranged. The magnetic fastening means is lined up in the same plane as the ruler and the rod in the other end of the ruler. The magnetic fastening means includes a powerful magnet 12 surrounding a conical mandrel 13 that is movable inside the magnet and pretensioned out from the magnet.

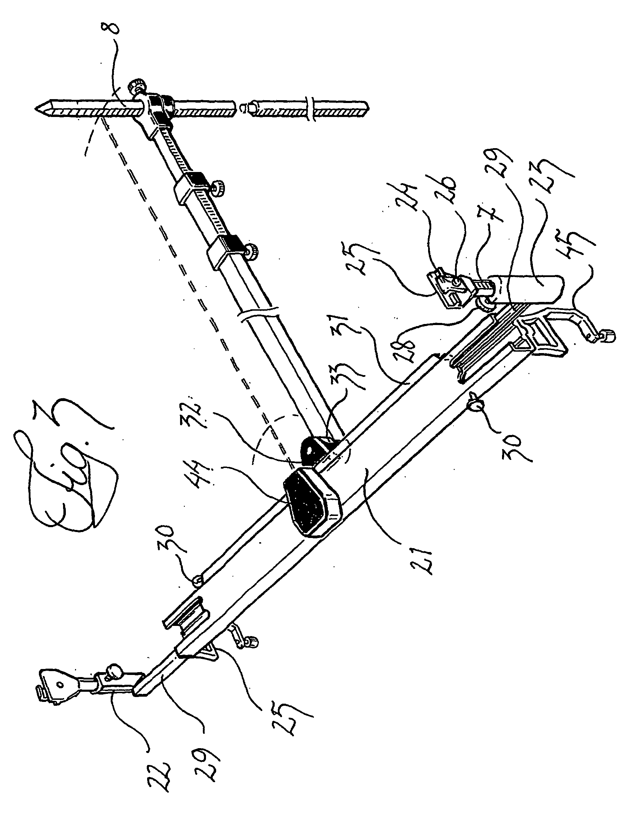

The ruler is in the magnetic fastening means pivotable laterally and heightwise in the plane of the ruler and the rod in the other end (fig 2). This enables simple measuring of the distance to different points or checking if these are in the right position during for instance straightening work, since with mounted fastening means the ruler can be lowered, moved laterally or not and once again be brought in contact with a measuring point on the vehicle.

As an alternative to arranging a magnet around the centering mandrel , the centering mandrel itself may constitute a powerful magnet with the surrounding guide instead being spring pretensioned towards the tip of the mandrel to secure perpendicularity between the monting means and the surface on which it is placed.

The fastening means may be extendable by the insertion of an extension between the the ruler and the magnet part for the cases when measuring for instance must take place past a low rear axle, muffler etc. The separability may also be practical if different fastening adapters are necessary, for instance adapted to the mounting points for lifting jacks for some cars. The different parts of the fastening bracket may be held together with magnetic force from the holding magnet or from separate magnets or by snaplocks.

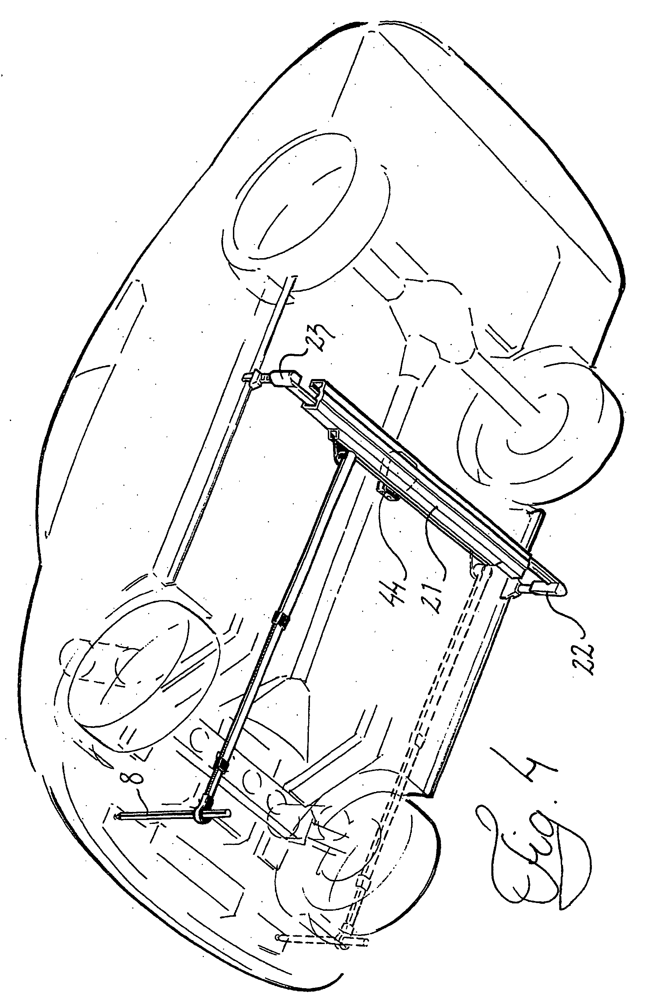

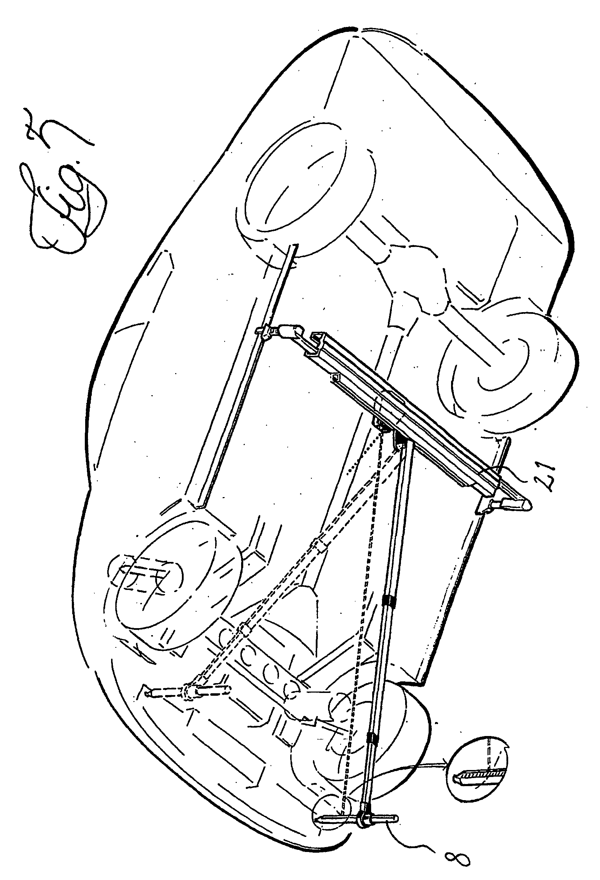

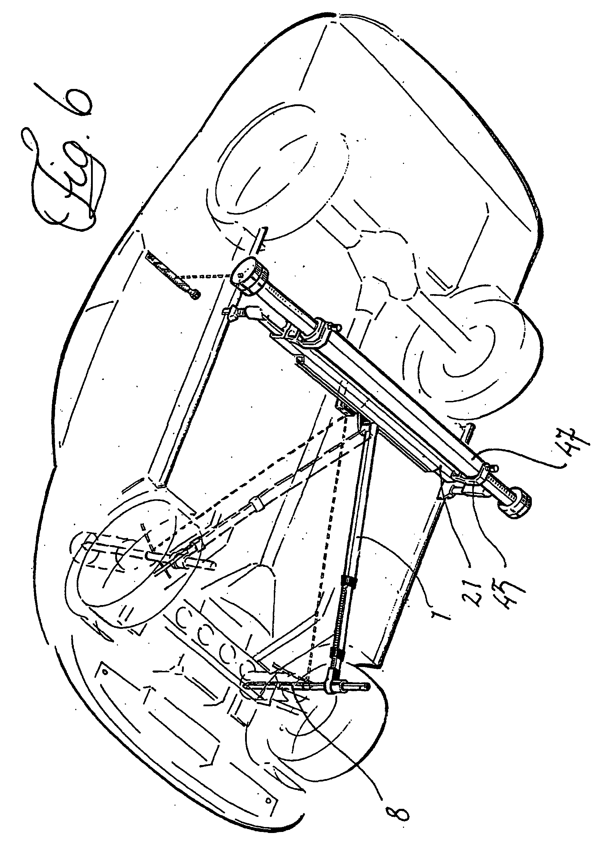

In a second embodiment the invented measuring device shown in fig 3 - 6 includes in addition to the above described ruler a beam 21 that can be mounted transversely on a vehicle. In both ends of the beam that is constituted by an extruded aluminum profile extendable brackets 22 and 23 are arranged for the mounting on the bottom of a car. For instance on the bottom flange of the thresholds. The brackets comprise simple clamping devices with a loose part 24 and a fix part 25 that are clampable by means of a bolt 26. The clamping devices are fastened to rods 27 that are arranged in vertical holes on the extendable brackets 22 and 23 and fixable by means of locking screws 28. Furthermore they are provided with scales so that different support levels for the beam 21 can be adjusted dependant on the underside contour of the car, but with the same measure on both sides, that is with symmetric mounting. The extendable brackets 22 and 23 continue in their inner ends in toothed racks 29 , that are arranged opposing and overlapping each other inside the profile with a sprocket between them and gripping into both racks 29, and journaled in the beam. This result in the extensions both being extended the same amount so that the beam always will be centered in relation to the car. On both sides locking screws 30 are threaded in the beam to fix the extended positions of the brackets.

On one side of the beam a U-shaped profile 31 with folded edges is arranged with its opening turned away from the beam. In this U-shaped guide a bracket 32 is displaceable transversely along the beam. Exactly in the center position between the brackets there is a little hole in the lower side of the profile and here a spring loaded ball arranged in the displaceable bracket 32 can snap in exactly when the centered position has been achieved. Two or more such snap positions are arranged in the shape of drilled holes symmetrically on each side of the centered hole to provide additional measuring positions with defined locations. In the bracket a 32 downwards extending short pin is arranged and on this a pivot part 33 (see also fig 2) can be pushed on from below pivotable around the pin. The pivot bearing is retained on the pin by means of a ball snap lock and the pivot bearing is fastened to a ruler of the same type as in the first described embodiment.

Measuring is carried out essentially as in the first embodiment but now with the ruler fixed to the self centering beam and located in the centered or in the symmetrical positions.

To complete the above principally two-dimensional measuring to a three-dimensional measuring a laser device 44 can be mounted on the bolt of the centrally placed sprocket between the racks. The laser device is held in place by a powerful magnet (atracting the bolt).

The laser device includes also a switch and a battery. In front of the laser a cylinder lens (with vertical axis) is arranged so that an essentially horizontal light line or plane is obtained.

Before measuring commences the light plane may be adjusted to parallelity with the floor or the datum plane of the car by checking the readings with known and undamaged points and by adjusting the fastening of the beam to the car.

The laser device 44 is directed so that the the laser line falls on the rod 8 in the small end of the ruler. When comparing readings from symmetric points on the left and right side it is immediately obvious if the same height readings are obtained. If not the car is skew. By providing the ruler with an extra marker on which the light shall fall it is possible get the ruler parallel with the datum plane of the car. Alternatively the ruler may be provided with a libell.

As is apparent from the above the invented device is simple to use and easy to understand and use, in a few minutes it is possible to see in absolute figures how and how much a car is damaged. This means that someone else than the one looking at the car and measuring it can take the decision on scraping or repairing. The figures can be compared with' previously repaired cars and their repair costs resulting in an improved decision basis and or cost prediction. If a sufficiently large number of figures are obtained not only is the decision made more easy but it also becomes more difficult to tamper with the figures for instance in order to salt the invoice.

If it is desirable to monitor for instance the straightening of a car with hydraulic means the all electronic 3D-version can be used to continuously monitor the work by using a magnetic fastening means in the outer end of the ruler too.

It further deserves to be mentioned that the selfcentering beam also can be used together with the symmetry measuring device 47 for body panels that is described in EP-A-0 676 617, this device being held in brackets 45.

## Claims

1. Ruler (1, 2, 3) for measuring vehicles being provided in one end with a rod (8) with a conical end for contact with measuring holes and points,
**characterised in that** the ruler (1, 2, 3) in its other end is provided with a magnetic fastening means (11) that has a centering means (13) for centering the fastening means (11) relative to a hole in the bottom of the vehicle.

2. Ruler according to claim 1, **characterised in that** the centering means is a conical mandrel (13) that, against the force of a spring, can be pushed into the fastening means (11).

3. Ruler according to claim 2, **characterised in that** the magnetic fastening means includes a magnet being cylindrical and surrounding the conical mandrel (13).

4. Ruler according to claim 1, **characterised in that** the fastening means (11) is dividable for the insertion of an extension piece lowering the ruler (1, 2, 3).

5. Ruler according to claim 4, **characterised in that** the extension piece includes a laser device delivering a line of light serving as a measuring plane falling on the rod, said light plane being arrangeable perpendicular to the vertical symmetry plane of the vehicle and parallel with the horizontal datum plane of the vehicle.

6. Ruler according to claim 1, **characterised in that** the rod (8) in the one end of the ruler (1, 2, 3) is in its upper end also provided with a magnetic selfcentering fastening means so that a specific length measure can be monitored while for instance straightening work is carried out.

7. Ruler according to claim 1, **characterised in that** the ruler (1, 2, 3) is extendable and pivotable and swingable both laterally and vertically relative to the fastening means (11) so that the rod (8) can be brought in contact with different measuring holes and points on the bottom of the vehicle, said ruler's (1, 2, 3) length and lateral and vertical angle in the fastening means (11) being electronically registerable and transferable to a computer for registration and/or computations of the coordinates of the measuring points.

## Patentansprüche

1. Richtvorrichtung (1, 2, 3) zum Vermessen von Fahrzeugen, welche an einem Ende mit einer Stange (8) mit einem konischen Ende zum Kontakt mit Meßöffnungen und -punkten versehen ist, **dadurch gekennzeichnet, daß** die Richtvorrichtung (1, 2, 3) am anderen Ende mit einer magnetischen Befestigungseinrichtung (11) versehen ist, welche eine Zentriereinrichtung (13) zum Zentrieren der Befestigungseinrichtung (11) relativ zu den Öffnungen im Boden des Fahrzeugs hat.

2. Richtvorrichtung nach Anspruch 1, **dadurch gekennzeichnet, daß** die Zentriereinrichtung von einem konischen Dorn (13) gebildet wird, welcher entgegen einer Kraft einer Feder in die Befestigungseinrichtung (11) gedrückt werden kann.

3. Richtvorrichtung nach Anspruch 2, **dadurch gekennzeichnet, daß** die magnetische Befestigungseinrichtung einen Magneten umfaßt, welcher zylindrisch ausgebildet ist, und den konischen Dorn (13) umgibt.

4. Richtvorrichtung nach Anspruch 1, **dadurch gekennzeichnet, daß** die Befestigungseinrichtung (11) zum Einführen eines Verlängerungsstücks unterteilbar ist, welches die Richtvorrichtung (1, 2, 3) absenkt.

5. Richtvorrichtung nach Anspruch 4, **dadurch gekennzeichnet, daß** das Verlängerungsstück eine Lasereinrichtung umfaßt, welche eine Lichtlinie abgibt, die als eine Meßebene dient, und die auf die Stange gerichtet ist, wobei die Lichtebene derart anordenbar ist, daß sie senkrecht zu der vertikalen Symmetrieebene des Fahrzeugs und parallel zu der horizontalen Bezugsebene des Fahrzeugs ist.

6. Richtvorrichtung nach Anspruch 1, **dadurch gekennzeichnet, daß** die Stange (8) an einem Ende der Richtvorrichtung (1, 2, 3) und am oberen Ende ebenfalls mit einer magnetischen selbstzentrierenden Befestigungseinrichtung versehen ist, so daß ein spezifisches Längenmaß während der Ausführung von Richtarbeiten überwacht werden kann.

7. Richtvorrichtung nach Anspruch 1, **dadurch gekennzeichnet, daß** die Richtvorrichtung (1, 2, 3) ausfahrbar, schwenkbar und drehbar sowohl seitlich als auch vertikal relativ zu der Befestigungseinrichtung (11) ausgelegt ist, so daß die Stange (8) in Kontakt mit unterschiedlichen Meßöffnungen und -stellen am Boden des Fahrzeugs gebracht werden kann, die Länge sowie der seitliche und der vertikale Winkel der Befestigungseinrichtung (11) der Richtvorrichtung (1, 2, 3) elektronisch erfaßbar und zu einem Rechner übertragbar sind, um die Koordinaten der Meßpunkte zu erfassen und/oder zu ermitteln.

## Revendications

1. Appareil de mesure (1, 2, 3) pour mesurer des véhicules, muni, à une première extrémité, d'une tige (8) ayant une extrémité conique destinée à venir en contact avec des trous et des points de mesure,
**caractérisé en ce que** l'appareil de mesure (1, 2, 3) est muni, à son autre extrémité, de moyens de fixation magnétiques (11) qui comportent des moyens de centrage (13) destinés à centrer les moyens de fixation (11) par rapport à un trou situé dans la partie inférieure du véhicule.

2. Appareil de mesure selon la revendication 1, **caractérisé en ce que** les moyens de centrage sont constitués d'un mandrin conique (13) qui, à l'encontre de la force d'un ressort, peut être poussé dans les moyens de fixation (11).

3. Appareil de mesure selon la revendication 2, **caractérisé en ce que** les moyens de fixation magnétiques comportent un aimant cylindrique et entourant le mandrin conique (13).

4. Appareil de mesure selon la revendication 1, **caractérisé en ce que** les moyens de fixation (11) peuvent être divisés pour l'insertion d'une pièce de prolongement abaissant l'appareil de mesure (1, 2, 3).

5. Appareil de mesure selon la revendication 4, **caractérisé en ce que** la pièce de prolongement comporte un dispositif à laser délivrant une ligne de lumière servant de plan de mesure tombant sur la tige, ledit plan de lumière pouvant être agencé perpendiculairement au plan de symétrie vertical du véhicule, et parallèlement au plan de référence horizontal du véhicule.

6. Appareil de mesure selon la revendication 1, **caractérisée en ce que** la tige (8) située à la première extrémité de l'appareil de mesure (1, 2, 3) est également munie, dans son extrémité supérieure, de moyens de fixation magnétiques à centrage automatique, de sorte qu'une mesure de longueur spécifique peut être surveillée tandis que par exemple un travail de redressement est effectué.

7. Appareil de mesure selon la revendication 1, **caractérisée en ce que** l'appareil de mesure (1, 2, 3) peut s'étendre et pivoter, et peut basculer latéralement et verticalement par rapport aux moyens de fixation (11), de sorte que la tige (8) peut être amenée en contact avec différents trous et points de mesure situés sur la partie inférieure du véhicule, ladite longueur de l'appareil de mesure (1, 2, 3) et lesdits angles latéral et vertical des moyens de fixation (11) pouvant être enregistrés et transférés électroniquement vers un ordinateur pour enregistrement et/ou calculs des coordonnées des points de mesure.
